# EUROPÄISCHE PATENTSCHRIFT

(11) **EP 2 148 113 B1**
(45) Veröffentlichungstag und Bekanntmachung des Hinweises auf die Patenterteilung: **30.08.2017**
(21) Anmeldenummer: 09164617.4
(22) Anmeldetag: 06.07.2009
(51) Int. Cl.: F16F 15/12, F16H 45/02

(54) **Torsionsschwingungsdämpferanordnung, insbesondere für eine hydrodynamische Kopplungsanordnung oder eine nasslaufende Kopplungsanordnung**
Torsional oscillation damping assembly, especially for a hydrodynamic coupling assembly or a wet-running coupling assembly
Agencement d'amortissement d'oscillations de torsions, notamment pour un agencement d'embrayage hydrodynamique ou agencement d'embrayage fonctionnant par voie humide

(30) Priorität: 21.07.2008 DE 102008033985
(43) Veröffentlichungstag der Anmeldung: 27.01.2010
(73) Patentinhaber: ZF Friedrichshafen AG, 88046 Friedrichshafen (DE)
(72) Erfinder: Wirachowski, Michael, 97078, Würzburg (DE)

(56) Entgegenhaltungen:
- FR-A1- 2 765 939
- FR-A1- 2 847 323

## Beschreibung

Die vorliegende Erfindung betrifft eine Torsionsschwingungsdämpferanordnung, wie sie zur Drehmomentübertragung beispielsweise in einer hydrodynamischen Kopplungsanordnung, wie z.B. hydrodynamischer Drehmomentwandler, oder einer nasslaufenden Kopplungsanordnung, wie z.B. nasslaufende Lamellenkupplung, eingesetzt werden kann.

Aus der DE 103 58 901 A1 ist ein Torsionsschwingungsdämpfer in einem hydrodynamischen Drehmomentwandler bekannt, welcher zwei im Drehmomentenfluss seriell liegende Torsionsschwingungsdämpferbereiche aufweist. Ein Turbinenrad des hydrodynamischen Drehmomentwandlers ist an einen Zwischenbereich zwischen die beiden Torsionsschwingungsdämpferbereiche angekoppelt, so dass einer der beiden Torsionsschwingungsdämpferbereiche im Drehmomentenfluss zwischen dem Turbinenrad und einem Abtriebsorgan, also einer Abtriebsnabe oder dergleichen liegt, während der andere der Torsionsschwingungsdämpferbereiche im Drehmomentübertragungsweg zwischen einer Überbrückungskupplungsanordnung und dem einen der Torsionsschwingungsdämpferbereiche und mithin auch dem Turbinenrad liegt.

Ein Eingangsbereich dieses zwei Torsionsschwingungsdämpferbereiche umfassenden Torsionsschwingungsdämpfers ist durch ein nach radial außen geführtes und auch axial abgekrümmtes Zentralscheibenelement gebildet, welches einen Reibelemententräger für ein lamellenartig ausgebildetes Reibelement der Überbrückungskupplungsanordnung bereitstellt. Dieses Zentralscheibenelement weist in seinem mit dem Reibelement zusammenwirkenden Bereich eine Verzahnungsformation auf, welche mit einer nach radial außen im Wesentlichen sich erstreckenden Verzahnungsformation am Reibelement in Drehkopplungseingriff steht. Das Reibelement an sich ist somit im Wesentlichen radial innerhalb des als Reibelemententräger wirksamen Bereichs des Zentralscheibenelements angeordnet, so dass dieser als Reibelemententräger wirksame Bereich als Außen-Reibelemententräger betrachtet werden kann.

Eine Torsionsschwingungsdämpferanordnung gemäß dem Oberbegriff des Anspruchs 1 ist aus der FR 2 765 939 A1 bekannt. Bei dieser bekannten Torsionsschwingungsdämpferanordnung ist ein zur Ankopplung eines Reibelemententrägers an einen Eingangsbereich eines Torsionsschwingungsdämpfers ausgebildeter Kopplungsbereich durch eine Mehrzahl von Nietbolzen mit einer von zwei den Eingangsbereich des Torsionsschwingungsdämpers bereitstellenden Seitenscheiben fest verbunden.

Es ist die Aufgabe der vorliegenden Erfindung, eine Torsionsschwingungsdämpferanordnung, insbesondere für eine hydrodynamische Kopplungsanordnung oder eine nasslaufende Kopplungsanordnung bereitzustellen, welche bei konstruktiv einfachem Aufbau die Übertragung auch großer Drehmomente gewährleistet.

Erfindungsgemäß wird diese Aufgabe gelöst durch eine Torsionsschwingungsdämpferanordnung, insbesondere für eine hydrodynamische Kopplungsanordnung oder eine nasslaufende Kopplungsanordnung, umfassend eine Torsionsschwingungsdämpferanordnung, insbesondere für eine hydrodynamische Kopplungsanordnung oder eine nasslaufende Kopplungsanordnung, umfassend einen Torsionsschwingungsdämpfer mit einem Eingangsbereich sowie einen Reibelemententräger mit einem ersten Kopplungsbereich zur Kopplung wenigstens eines Reibelements zur gemeinsamen Drehung mit dem Reibelemententräger um eine Drehachse und einem zweiten Kopplungsbereich zur Kopplung des Reibelemententrägers mit dem Eingangsbereich des Torsionsschwingungsdämpfers vermittels eines Kopplungselements, wobei das Kopplungselement mit dem zweiten Kopplungsbereich des Reibelemententrägers vermittels einer Mehrzahl von Verbindungselementen zur gemeinsamen Drehung um die Drehachse fest gekoppelt ist und wobei eine Eingriffsformation Eingriffsaussparungen am Reibelemententräger und in die Eingriffsaussparungen eingreifende Eingriffsvorsprünge am Kopplungselement umfasst.

Bei der erfindungsgemäßen Ausgestaltung einer Torsionsschwingungsdämpferanordnung erfolgt die drehfeste Verbindung eines Reibelemententrägers mit dem Eingangsbereich eines Torsionsschwingungsdämpfers über ein Kopplungselement, das mit dem Reibelemententräger zur Drehmomentübertragung fest verbunden ist. Da im Bereich der Eingriffsformation der Reibelemententräger und das Kopplungselement axial ineinander eindringen, wird auch bei Einsatz vergleichsweise dicker Aufbaumaterialien eine dort axial sehr klein bauende Anordnung geschaffen, die Bauraum schafft für andere Komponenten, beispielsweise eine Dämpferelementenanordnung des Torsionsschwingungsdämpfers.

Weiterhin wird vorgeschlagen, dass zwischen in Umfangsrichtung aufeinander folgenden Eingriffsvorsprüngen am Kopplungselement Aussparungen vorgesehen sind. Dabei können die Eingriffsvorsprünge durch axiale Ausformungen gebildet sein, was insbesondere bei Ausgestaltung des anderen Elements aus Blechmaterial bei dessen Herstellungsvorgang leicht realisierbar ist.

Um die Stabilität der erfindungsgemäßen Torsionsschwingungsdämpferanordnung zur Übertragung hoher Drehmomente weiter gewährleisten zu können, wird vorgeschlagen, dass der Reibelemententräger radial innerhalb oder/und radial außerhalb der Eingriffsaussparungen ringartig ausgebildet ist.

Um für die Eingriffsformation möglichst viel Bauraum bzw. Umfangserstreckungslänge bereitstellen zu können, wird vorgeschlagen, dass die Eingriffsformation radial außerhalb der Verbindungselemente vorgesehen ist.

Auch das Kopplungselement selbst kann mit dem Eingangsbereich des Torsionsschwingungsdämpfers durch eine Mehrzahl von Verbindungselementen, wie z.B. Nietbolzen, verbunden sein.

Die Eingriffsformation ist vorzugsweise radial im Bereich einer

Dämpferelementenanordnung des Torsionsschwingungsdämpfers vorgesehen, so dass für diese Dämpferelementenanordnung ausreichend axialer Bauraum zur Verfügung gestellt wird. Hierzu ist vorzugsweise auch vorgesehen, dass das Kopplungselement axial im Wesentlichen zwischen dem Reibelemententräger und dem Torsionsschwingungsdämpfer vorgesehen ist.

Die vorliegende Erfindung betrifft ferner eine hydrodynamische Kopplungsanordnung, insbesondere hydrodynamischer Drehmomentwandler, bzw. eine nasslaufende Kopplungsanordnung, umfassend ein mit Fluid gefülltes oder befüllbares Gehäuse, das über eine Überbrückungskupplungsanordnung und eine erfindungsgemäße Torsionsschwingungsdämpferanordnung mit einem Abtriebsorgan zur Drehmomentübertragung koppelbar ist.

Die vorliegende Erfindung wird nachfolgend mit Bezug auf die beiliegenden Figuren detailliert erläutert. Es zeigt:
- Fig. 1: eine Teil-Längsschnittansicht einer Torsionsschwingungsdämpferanordnung für einen hydrodynamischen Drehmomentwandler;
- Fig. 2: eine perspektivische Ansicht eines Reibelemententrägers der Torsionsschwingungsdämpferanordnung der Fig. 1;
- Fig.3: eine perspektivische Ansicht eines Kopplungselements der Torsionsschwingungsdämpferanordnung der Fig. 1;
- Fig. 4: einen Zusammenbau des in Fig. 2 gezeigten Reibelemententrägers mit dem in Fig. 3 gezeigten Kopplungselement;
- Fig. 5: eine Teil-Axialansicht des in Fig. 4 erkennbaren Zusammenbaus;

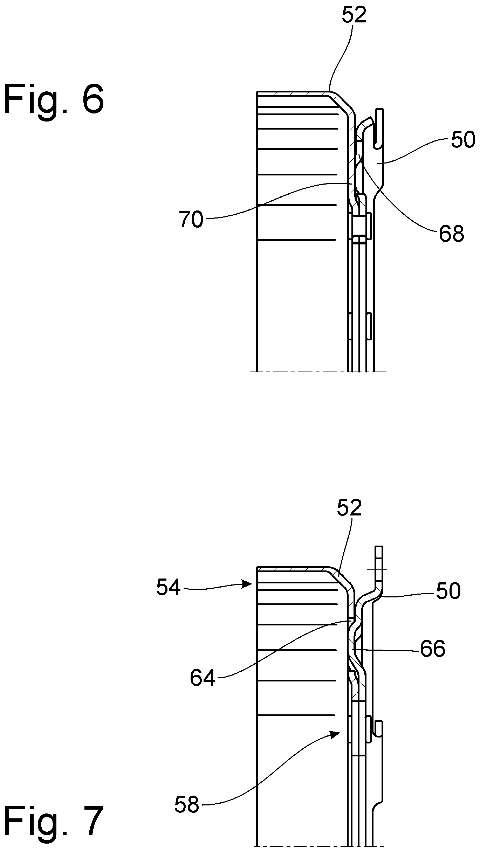

- Fig. 6: eine Schnittansicht des in Fig. 5 dargestellten Zusammenbaus, geschnitten längs einer Linie VI - VI;
- Fig. 7: eine Schnittansicht des in Fig. 5 gezeigten Zusammenbaus, geschnitten längs einer Linie VII - VII in Fig. 5.

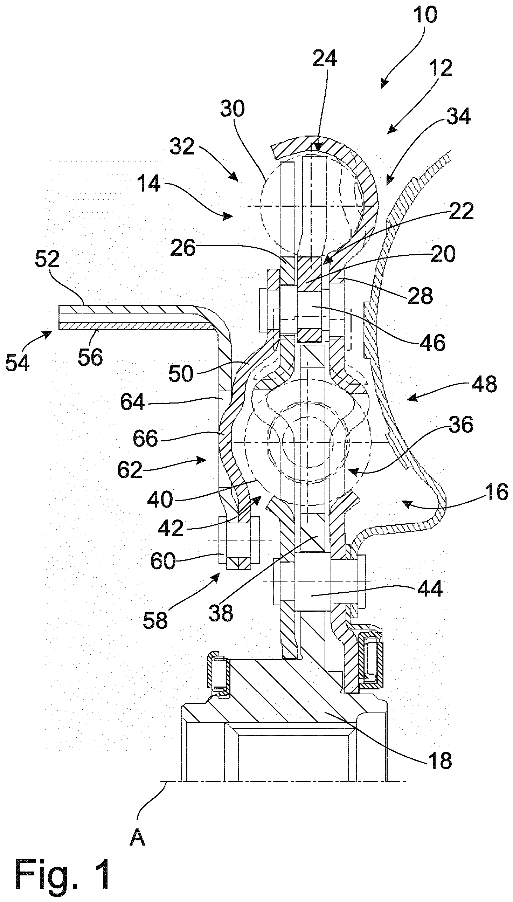

Die in Fig. 1 erkennbare Torsionsschwingungsdämpferanordnung 10 umfasst einen Torsionsschwingungsdämpfer 12 mit zwei Torsionsschwingungsdämpferbereichen 14, 16. Die beiden Torsionsschwingungsdämpferbereiche 14, 16 liegen grundsätzlich seriell zueinander im Drehmomentenfluss beispielsweise zwischen einem nicht dargestellten Gehäuse eines hydrodynamischen Drehmomentwandlers und einer Abtriebsnabe 18.

Der radial äußere Torsionsschwingungsdämpferbereich 14 umfasst ein Zentralscheibenelement 20, welches gleichzeitig auch den Eingangsbereich 22 des Torsionsschwingungsdämpfers 12 sowie eine Primärseite 24 des Torsionsschwingungsdämpferbereichs 14 bildet. Beidseits des Zentralscheibenelements 20 sind Deckscheibenelemente 26, 28 vorgesehen, die, ebenso wie das Zentralscheibenelement 20 in ihrem radial äußeren Bereich Abstützbereiche für die Dämpferelemente 30, also beispielsweise Schraubendruckfedern, einer Dämpferelementenordnung 32 des Torsionsschwingungsdämpferbereichs 14 bereitstellen. Die beiden Deckscheibenelemente 26, 28 bilden in ihrem radial äußeren Bereich eine Sekundärseite 34 des Torsionsschwingungsdämpferbereichs 14.

In ihrem radial inneren Bereich bilden die beiden Deckscheibenelemente 26, 28 eine Primärseite 36 des radial inneren Torsionsschwingungsdämpferbereichs 16. Dort liegt zwischen den beiden Deckscheibenelementen ein Zentralscheibenelement 38, das radial innen beispielsweise durch integrale Ausgestaltung an die Abtriebsnabe 18 angebunden ist und, ebenso wie die Deckscheibenelemente 26, 28, Abstützbereiche für die Dämpferelemente 40, also beispielsweise Schraubendruckfedern, einer Dämpferelementenanordnung 42 des Torsionsschwingungsdämpferbereichs 16 bereitstellen. Radial innerhalb der Dämpferelementenanordnung 42 sind die beiden Deckscheibenelemente 26, 28 durch Nietbolzen 44 miteinander fest verbunden und auch mit einer Turbinenradschale 46 eines allgemein mit 48 bezeichneten Turbinenrads fest verbunden. Diese Anbindung des Turbinenrads 48 liegt somit im Drehmomentenfluss zwischen den beiden Dämpferelementenanordnungen 32, 42, also sekundärseitig bezüglich des radial äußeren Torsionsschwingungsdämpferbereichs 14 und primärseitig bezüglich des radial inneren Torsionsschwingungsdämpferbereichs 16. Um die Relativdrehbarkeit der Deckscheibenelemente 26, 28 bezüglich des Zentralscheibenelements 38 zu gewährleisten, sind in diesem Zentralscheibenelement 38 für die Nietbolzen 44 Umfangsaussparungen vorgesehen, die gleichzeitig in Verbindung mit dem Nietbolzen 44 eine Drehwinkelbegrenzung für den Torsionsschwingungsdämpferbereich 16 bereitstellen können.

Zwischen den beiden Dämpferelementenanordnungen 32, 42 sind die Deckscheibenelemente 26, 28 durch Nietbolzen 46 miteinander und mit dem mit Befestigungslaschen 49 ausgebildeten radial äußeren Bereich eines beispielsweise aus Blechmaterial ausgebildeten Kopplungselements 50 fest verbunden. Auch diese können sich in Umfangsaussparungen des Zentralscheibenelements 20 bewegen, um die Relativumfangsbewegbarkeit zu gewährleisten und auch eine Drehwinkelbegrenzungsfunktion für den Torsionsschwingungsdämpferbereich 14 zu erzeugen. Ausgehend von dieser Anbindung erstreckt sich das Kopplungselement 50, das grundsätzlich eine ringartige Struktur aufweist, nach radial innen und überdeckt dabei im Wesentlichen die Dämpferelementenanordnung 42 des radial inneren Torsionsschwingungsdämpferbereichs 46.

Die Torsionsschwingungsdämpferanordnung 10 umfasst ferner einen beispielsweise ebenfalls aus Blechmaterial geformten Reibelemententräger 52 für zumindest ein in der Fig. 1 nicht dargestelltes lamellenartig ausgebildetes Reibelement, beispielsweise einer Überbrückungskupplungsanordnung im Falle eines hydrodynamischen Drehmomentwandlers. Der Reibelemententräger 52 weist einen ersten Kopplungsbereich 54 mit einer Verzahnung 56 auf, die mit einer komplementären Verzahnung am Außenumfang zumindest eines Reibelements in Drehkopplungseingriff steht, so dass zumindest ein Reibelement mit dem Reibelemententräger 52 zur gemeinsamen Drehung um die Drehachse A gekoppelt ist, bezüglich diesem jedoch in Richtung der Drehachse A bewegbar ist. Zumindest ein weiteres Reibelement ist dann mit einem weiteren gehäuseseitig anzubindenden Reibelemententräger zur gemeinsamen Drehung zu verbinden, um durch Reibeingriff zwischen diesen Reibelementen ein Drehmoment übertragen zu können. Der Reibelemententräger 52 ist als Außen-Reibelemententräger ausgebildet, liegt also mit seinem ersten Kopplungsbereich 54 im Wesentlichen radial außerhalb des zumindest einen damit drehfest zu koppelnden Reibelements.

Mit einem zweiten Kopplungsbereich 58 erstreckt sich der Reibelemententräger 52 im Wesentlichen ringscheibenartig nach radial innen und endet näherungsweise auf dem gleichen radialen Niveau wie das Kopplungselement 52.

In ihren radial inneren vorzugsweise ringartig umlaufend ausgebildeten und nebeneinander liegenden Bereichen sind der Reibelemententräger 52 und das Kopplungselement 50 durch Verbindungselemente, vorzugsweise Nietbolzen 60, miteinander fest verbunden. Auf diese Art und Weise ist eine in Achsrichtung, in radialer Richtung und in Umfangsrichtung feste Verbindung zwischen dem Reibelemententräger 52 und dem Kopplungselement 50 realisiert.

An dem Reibelemententräger 52 und dem Kopplungselement 50 ist eine allgemein mit 62 bezeichnete Eingriffsformation vorgesehen. Diese umfasst im dargestellten Beispiel nahe dem zweiten Kopplungsbereich 58 des Reibelemententrägers 52 eine Mehrzahl von in Umfangsrichtung aufeinander folgenden Eingriffsaussparungen 64, die sowohl nach radial außen als auch nach radial innen abgeschlossen sind, so dass sich, wie vorangehend bereits dargelegt, insbesondere auch im radial inneren Bereich die ringartig durchlaufende Struktur des Reibelemententrägers 52 ergibt.

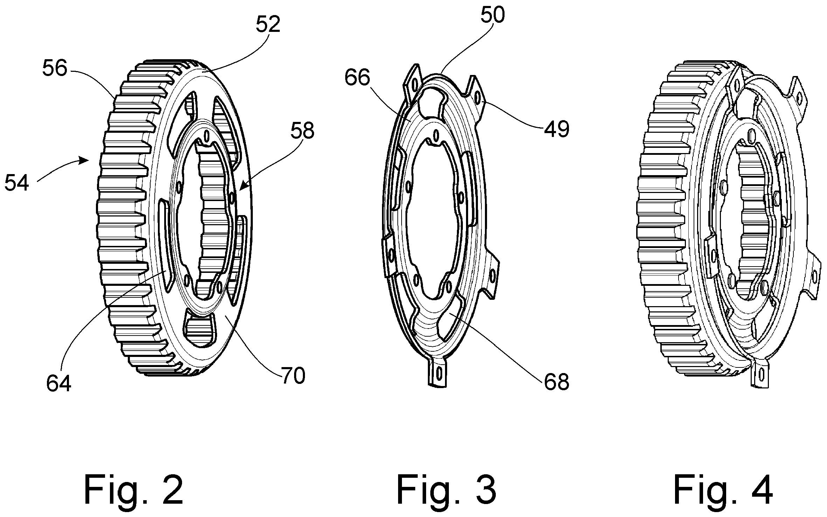

Am Kopplungselement 50 sind in Zuordnung zu den Eingriffsaussparungen 64 Eingriffsvorsprünge 66 vorgesehen. Man erkennt dabei in Fig. 3, dass in Umfangsrichtung zwischen den durch axiale Ausformungen bzw. Ausbauchungen des Kopplungselements 50 gebildeten Eingriffsvorsprüngen 66 Aussparungen 68 gebildet sind, die in dem in Fig. 4 erkennbaren Zusammenbauzustand in Umfangsrichtung dort positioniert sind, wo am Reibelemententräger 52 zwischen zwei in Umfangsrichtung aufeinander folgenden Eingriffsaussparungen 64 Stege 70 liegen.

Weiter erkennt man insbesondere in Fig. 1, dass in radialer Richtung bezüglich der Drehachse A die Eingriffsvorsprünge 66 und die Eingriffsaussparungen 64 im Bereich der Dämpferelemente 40 der Dämpferelementenanordnung 42 des Torsionsschwingungsdämpferbereichs 16 liegen.

Durch die erfindungsgemäße Ausgestaltung mit den Eingriffsvorsprüngen 66 am Kopplungselement 50 und den Eingriffsaussparungen 64 am Reibelemententräger 52 wird eine Anordnung geschaffen, bei der in dem radialen Bereich, in welchem die Eingriffsvorsprünge 66 und die Eingriffsaussparungen 64 liegen, der Zusammenbau aus diesen beiden Elementen 50, 52 durch das Ineinandereingreifen einerseits und durch die an dem Kopplungselement 50 gebildeten Aussparungen 68 andererseits eine vergleichsweise geringe axiale Bauhöhe aufweist und insbesondere einen vergleichsweise großen Abstand zu den Dämpferelementen 40 des Torsionsschwingungsdämpferbereichs 16 aufweist. Ein gegenseitiges Stören des Kopplungselements 50 bzw. des Reibelemententrägers 52 mit den Dämpferelementen 40 kann dadurch vermieden werden.

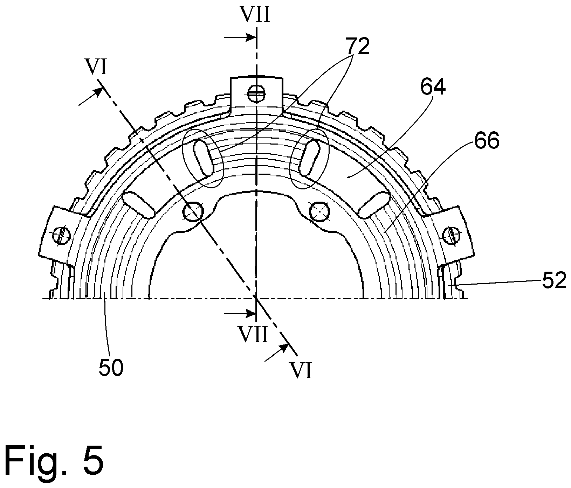

Weiter erkennt man in Fig. 5, dass dort, wo die Eingriffsvorsprünge 66 in Eingriffsaussparungen 64 eingreifen, jeweils im Umfangsendbereich auch bei hergestelltem Eingriff die in Fig. 5 eingefasst dargestellten Öffnungen 72 verbleiben. Diese Öffnungen 72 ermöglichen den Durchtritt von Fluid, das in einer hydrodynamischen Kopplungsanordnung oder einer nasslaufenden Kopplungsanordnung die Torsionsschwingungsdämpferanordnung 10 im Allgemeinen umströmt. Dies bedeutet einen deutlich geringeren Strömungswiderstand für das Fluid, beispielsweise ÖI, und ermöglicht auch das zuverlässige Anströmen der Reibelemente radial innerhalb des Reibelemententrägers 52 bzw. des Torsionsschwingungsdämpfers 12.

Mit der erfindungsgemäßen Ausgestaltung wird eine sehr stabile Anordnung geschaffen, da auf Grund des vergleichsweise geringen axialen Bauraumbedarfs dort, wo die Dämpferelemente 40 liegen, sowohl für den Reibelemententräger 52, als auch für das Kopplungselement 50 vergleichsweise dickes Aufbaumaterial verwendet werden kann.

## Patentansprüche

1. Torsionsschwingungsdämpferanordnung, insbesondere für eine hydrodynamische Kopplungsanordnung oder eine nasslaufende Kopplungsanordnung, umfassend einen Torsionsschwingungsdämpfer (12) mit einem Eingangsbereich (22) sowie einen Reibelemententräger (52) mit einem ersten Kopplungsbereich (54) zur Kopplung wenigstens eines Reibelements zur gemeinsamen Drehung mit dem Reibelemententräger (52) um eine Drehachse (A) und einem zweiten Kopplungsbereich (58) zur Kopplung des Reibelemententrägers (52) mit dem Eingangsbereich (22) des Torsionsschwingungsdämpfers (12), wobei der zweite Kopplungsbereich (58) mit dem Eingangsbereich (22) vermittels eines Kopplungselements (50) gekoppelt ist, wobei das Kopplungselement (50) mit dem zweiten Kopplungsbereich (58) des Reibelemententrägers (52) vermittels einer Mehrzahl von Verbindungselementen (60) zur gemeinsamen Drehung um die Drehachse (A) fest gekoppelt ist, und wobei eine Eingriffsformation (62) Eingriffsaussparungen (64) am Reibelemententräger (52) und in die Eingriffsaussparungen (64) eingreifende Eingriffsvorsprünge (66) am Kopplungselement (50) umfasst, und **dadurch gekennzeichnet, dass** zwischen in Umfangsrichtung aufeinander folgenden Eingriffsvorsprüngen (66) am Kopplungselement (50) Aussparungen (68) vorgesehen sind.

2. Torsionsschwingungsdämpferanordnung nach Anspruch 1,
**dadurch gekennzeichnet, dass** die Eingriffsvorsprünge (66) durch axiale Ausformungen gebildet sind.

3. Torsionsschwingungsdämpferanordnung nach Anspruch 2,
**dadurch gekennzeichnet, dass** der Reibelemententräger (52) radial innerhalb oder/und radial außerhalb der Eingriffsaussparungen (64) ringartig ausgebildet ist.

4. Torsionsschwingungsdämpferanordnung nach einem der Ansprüche 1 bis 3,
**dadurch gekennzeichnet, dass** die Eingriffsformation (62) radial außerhalb der Verbindungselemente (60) vorgesehen ist.

5. Torsionsschwingungsdämpferanordnung nach einem der Ansprüche 1 bis 4,
**dadurch gekennzeichnet, dass** die Eingriffsformation (62) radial im Bereich einer Dämpferelementenanordnung (42) des Torsionsschwingungsdämpfers (12) vorgesehen ist.

6. Torsionsschwingungsdämpferanordnung nach einem der Ansprüche 1 bis 5,
**dadurch gekennzeichnet, dass** das Kopplungselement (50) mit dem Eingangsbereich (22) des Torsionsschwingungsdämpfers (12) durch eine Mehrzahl von Verbindungselementen (46) verbunden ist.

7. Torsionsschwingungsdämpferanordnung nach einem der Ansprüche 1 bis 6,
**dadurch gekennzeichnet, dass** das Kopplungselement (50) axial im Wesentlichen zwischen dem Reibelemententräger (52) und dem Torsionsschwingungsdämpfer (12) vorgesehen ist.

8. Hydrodynamische Kopplungsanordnung, insbesondere hydrodynamischer Drehmomentwandler, umfassend ein mit Fluid gefülltes oder befüllbares Gehäuse, das über eine Überbrückungskupplungsanordnung und eine Torsionsschwingungsdämpferanordnung (10) nach einem der vorangehenden Ansprüche mit einem Abtriebsorgan zur Drehmomentübertragung koppelbar ist.

9. Nasslaufende Kopplungsanordnung, umfassend ein mit Fluid gefülltes oder befüllbares Gehäuse, das über eine Überbrückungskupplungsanordnung und eine Torsionsschwingungsdämpferanordnung (10) nach einem der Ansprüche 1 bis 7 mit einem Abtriebsorgan zur Drehmomentübertragung koppelbar ist.

## Claims

1. Torsional vibration damper arrangement, in particular for a hydrodynamic coupling arrangement or a wet-running coupling arrangement, comprising a torsional vibration damper (12) with an input region (22) and comprising a friction element carrier (52) with a first coupling region (54) for the coupling of at least one friction element for common rotation with the friction element carrier (52) about an axis of rotation (A) and with a second coupling region (58) for the coupling of the friction element carrier (52) to the input region (22) of the torsional vibration damper (12), wherein the second coupling region (58) is coupled to the input region (22) by means of a coupling element (50), wherein the coupling element (50) is fixedly coupled to the second coupling region (58) of the friction element carrier (52) by means of a multiplicity of connecting elements (60) for the purposes of common rotation about the axis of rotation (A), and wherein an engagement formation (62) comprises engagement apertures (64) on the friction element carrier (52) and engagement projections (66) on the coupling element (50), which engagement projections engage into the engagement apertures (64), and **characterized in that** apertures (68) are provided on the coupling element (50) between engagement projections (66) which follow one another in the circumferential direction.

2. Torsional vibration damper arrangement according to Claim 1, **characterized in that** the engagement projections (66) are formed by axial protuberances.

3. Torsional vibration damper arrangement according to Claim 2, **characterized in that** the friction element carrier (52) is of ring-shaped form radially within and/or radially outside the engagement apertures (64).

4. Torsional vibration damper arrangement according to one of Claims 1 to 3, **characterized in that** the engagement formation (62) is provided radially outside the connecting elements (60).

5. Torsional vibration damper arrangement according to one of Claims 1 to 4, **characterized in that** the engagement formation (62) is provided radially in the region of a damper element arrangement (42) of the torsional vibration damper (12).

6. Torsional vibration damper arrangement according to one of Claims 1 to 5, **characterized in that** the coupling element (50) is connected to the input region (22) of the torsional vibration damper (12) by means of a multiplicity of connecting elements (46).

7. Torsional vibration damper arrangement according to one of Claims 1 to 6, **characterized in that** the coupling element (50) is provided axially substantially between the friction element carrier (52) and the torsional vibration damper (12).

8. Hydrodynamic coupling arrangement, in particular hydrodynamic torque converter, comprising a housing which is or can be filled with fluid and which can be coupled by means of a lock-up clutch arrangement and a torsional vibration damper arrangement (10) according to one of the preceding claims to a drive-output element for the purposes of torque transmission.

9. Wet-running coupling arrangement, comprising a housing which is or can be filled with fluid and which can be coupled by means of a lock-up clutch arrangement and a torsional vibration damper arrangement (10) according to one of Claims 1 to 7 to a drive-output element for the purposes of torque transmission.

## Revendications

1. Agencement d'amortissement de vibrations de torsion, en particulier pour un agencement d'embrayage hydrodynamique ou un agencement d'embrayage fonctionnant par voie humide, comprenant un amortisseur de vibrations de torsion (12) avec une région d'entrée (22) ainsi qu'un support d'élément de friction (52) avec une première région de couplage (54) pour le couplage d'au moins un élément de friction en vue de la rotation commune avec le support d'élément de friction (52) autour d'un axe de rotation (A) et avec une deuxième région de couplage (58) pour le couplage du support d'élément de friction (52) avec la région d'entrée (22) de l'amortisseur de vibrations de torsion (12), dans lequel la deuxième région de couplage (58) est couplée avec la région d'entrée (22) au moyen d'un élément de couplage (50), dans lequel l'élément de couplage (50) est couplé fixement avec la deuxième région de couplage (58) du support d'élément de friction (52), au moyen d'une multiplicité d'éléments de liaison (60) en vue de la rotation commune autour de l'axe de rotation (A), et dans lequel une formation d'engrènement (62) comprend des creux d'engrènement (64) sur le support d'élément de friction (52) et des saillies d'engrènement (66) sur l'élément de couplage (50) qui engrènent avec les creux d'engrènement (64), **caractérisé en ce qu'**il est prévu des découpes (68) entre des saillies d'engrènement (66) qui se succèdent en direction périphérique sur l'élément de couplage (50).

2. Agencement d'amortissement de vibrations de torsion selon la revendication 1, **caractérisé en ce que** les saillies d'engrènement (66) sont formées par des déformations axiales.

3. Agencement d'amortissement de vibrations de torsion selon la revendication 2, **caractérisé en ce que** le support d'élément de friction (52) est réalisé en forme d'anneau radialement à l'intérieur et/ou radialement à l'extérieur des découpes d'engrènement (64).

4. Agencement d'amortissement de vibrations de torsion selon l'une quelconque des revendications 1 à 3, **caractérisé en ce que** la formation d'engrènement (62) est prévue radialement à l'extérieur des éléments de liaison (60).

5. Agencement d'amortissement de vibrations de torsion selon l'une quelconque des revendications 1 à 4, **caractérisé en ce que** la formation d'engrènement (62) est prévue radialement dans la région d'un agencement d'élément d'amortisseur (42) de l'amortisseur de vibrations de torsion (12).

6. Agencement d'amortissement de vibrations de torsion selon l'une quelconque des revendications 1 à 5, **caractérisé en ce que** l'élément de couplage (50) est relié à la région d'entrée (22) de l'amortisseur de vibrations de torsion (12) par une multiplicité d'éléments de liaison (46).

7. Agencement d'amortissement de vibrations de torsion selon l'une quelconque des revendications 1 à 6, **caractérisé en ce que** l'élément de couplage (50) est prévu axialement essentiellement entre le support d'élément de friction (52) et l'amortisseur de vibrations de torsion (12).

8. Agencement d'embrayage hydrodynamique, en particulier convertisseur de couple hydrodynamique, comprenant un carter rempli ou pouvant être rempli d'un fluide, qui peut être couplé par un dispositif d'embrayage de pont et un agencement d'amortissement de vibrations de torsion (10) selon l'une quelconque des revendications précédentes, à un organe de sortie en vue de la transmission de couples.

9. Agencement d'embrayage fonctionnant par voie humide, comprenant un carter rempli ou pouvant être rempli d'un fluide, qui peut être couplé par un dispositif d'embrayage de pont et un agencement d'amortissement de vibrations de torsion (10) selon l'une quelconque des revendications 1 à 7, à un organe de sortie en vue de la transmission de couples.
